# EUROPÄISCHE PATENTANMELDUNG

(11) **EP 1 840 465 A2**
(43) Veröffentlichungstag der Anmeldung: **03.10.2007**
(21) Anmeldenummer: 07101562.2
(22) Anmeldetag: 01.02.2007
(51) Int. Cl.: F23N 5/02, F23R 3/34, F23R 3/36, F02C 7/228, F02C 9/28, F02C 9/40

(54) **Brennersystem mit gestufter Brennstoff-Eindüsung**

(30) Priorität: 31.03.2006 DE 102006015529
(71) Anmelder: Alstom Technology Ltd, 5400 Baden (CH)
(72) Erfinder: Garay, Mauricio, Ernesto, 5539, Las Heras Mendoza (AR); Bernero, Stefano, 5452, Oberrohrdorf (CH); Schuermans, Bruno, 4057, Basel (CH); Zajadatz, Martin, 79790, Küssaberg (DE)

(57) **Zusammenfassung**

Die vorliegende Erfindung betrifft ein Brennersystem (1) mit gestufter Brennstoff-Eindüsung, welches zumindest einen Brenner (2) mit einer Mischzone (4) umfasst. Dabei ist stromab der Mischzone (4) eine Brennkammer (3) angeordnet, während stromauf der Mischzone (4) eine erste Brennstoffeinbringeinrichtung (6) vorgesehen ist. Stromab der Mischzone (4) ist darüber hinaus eine zweite Brennstoffeinbringeinrichtung (7, 7') zur direkten Einspritzung von Brennstoff in die Brennkammer (3) angeordnet. Des Weiteren ist zumindest ein Sensor (9) zur Ermittlung verbrennungstechnischer Parameter vorgesehen, welcher mit einer Steuereinrichtung (12) verbunden ist. Die Steuereinrichtung (12) ist dabei zur Steuerung der zweiten Brennstoffeinbringeinrichtung (7, 7') in Abhängigkeit der von den Sensoren (9) ermittelten Parametern ausgebildet.

## Beschreibung

### Technisches Gebiet

Die vorliegende Erfindung betrifft ein Brennersystem mit gestufter Brennstoff-Eindüsung sowie ein Verfahren zur Steuerung eines derartigen Brennersystems.

### Stand der Technik

Die immer strenger werdenden Vorschriften über einzuhaltende Grenzwerte für Schadstoffemissionen veranlassen die Betreiber von Kraftwerksanlagen dazu, die Brenner der Kraftwerksanlagen möglichst mager zu betreiben, das heißt, mit einem deutlichen Überschuss an Oxidator, in der Regel Luft. Durch den Magerbetrieb ist es möglich, vor allem die Entstehung besonders schädlicher NOₓ-Emissionen zu reduzieren und gleichzeitig die Verbrennungsreaktion an ihre magere Löschgrenze anzunähern. Der Betrieb einer Feuerungsanlage nahe an deren magerer Löschgrenze bewirkt zwar einerseits einen geringen Ausstoß an Schadstoffen, birgt andererseits jedoch die Gefahr, dass die Flamme durch entstehende Druckpulsationen erlöscht und dadurch ein ordnungsgemäßer Betrieb der Feuerungsanlage nicht mehr gewährleistet ist. Um dem entgegenzuwirken, wird regelmäßig in Kauf genommen, dass die Feuerungsanlage bezüglich der mageren Löschgrenze mit einem ausreichenden Sicherheitsabstand betrieben wird, wobei dann die daraus resultierenden größeren Schadstoffemissionen in Kauf genommen werden.

### Darstellung der Erfindung

Hier setzt die vorliegende Erfindung an. Die Erfindung, wie sie in den Ansprüchen gekennzeichnet ist, beschäftigt sich mit dem Problem, einerseits ein Brennersystem möglichst nahe an der mageren Löschgrenze und damit möglichst schadstoffarm zu betreiben, andererseits jedoch ein Erlöschen der Flamme im Brennersystem unbedingt zu vermeiden.

Erfindungsgemäß wird dieses Problem durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, bei einem Brennersystem mit gestufter Brennstoffeindüsung eine erste und eine zweite Brennstoffeinbringeinrichtung vorzusehen und eine Steuereinrichtung bereitzustellen, welche die zweite Brennstoffeinbringeinrichtung in Abhängigkeit von in der Brennkammer ermittelten verbrennungstechnisch relevanten Parametern steuert. Das Brennersystem umfasst dabei einen Brenner mit einer Mischzone und einer stromab dieser Mischzone gelegenen Brennkammer. Dabei ist die erste Brennstoffeinbringeinrichtung stromauf der Mischzone angeordnet, während die zweite Brennstoffeinbringeinrichtung stromab der Mischzone liegt und Brennstoff direkt in die Brennkammer einbringen kann. Erfindungsgemäß umfasst das Brennersystem auch zumindest einen Sensor zur Ermittlung oben genannter verbrennungstechnischer Parameter, wobei der zumindest eine Sensor mit einer Eingangsseite der Steuereinrichtung kommunizierend verbunden ist. Ausgangsseitig ist die Steuereinrichtung mit der zweiten Brennstoffeinbringeinrichtung kommunizierend verbunden, so dass die Steuereinrichtung die in der Brennkammer ermittelten Parameter auswerten und vorzugsweise mit einem vorgegebenen Sollwert vergleichen kann und bei Abweichungen von diesem Sollwert die zweite Brennstoffeinbringeinrichtung dementsprechend steuert. Über die Steuereinrichtung kann somit in Abhängigkeit der ermittelten Parameter direkt Einfluss auf die zweite Brennstoffeinbringeinrichtung genommen werden, während die erste Brennstoffeinbringeinrichtung unbeeinflusst davon weiter Brennstoff in die Mischzone bzw. in den Einströmbereich des Brenners einbringen kann.

Bei einer vorteilhaften Weiterbildung der erfindungsgemäßen Lösung ist die zweite Brennstoffeinbringeinrichtung entweder an einer Ausgangsseite des Brenners ausgebildet oder getrennt von diesem in einer Brennkammerwand angeordnet. Bei einer Anordnung in einer Brennkammerwand ist hierbei vorzugsweise dieselbe Wand gewählt, in welcher sich auch die Ausgangsseite des Brenners befindet. Bei mehreren Brennern ist es selbstverständlich auch möglich, dass die zweite Brennstoffeinbringeinrichtung bei einer Gruppe von Brennern an der Ausgangsseite des Brenners ausgebildet ist, während die zweite Brennstoffeinbringeinrichtung bei einer anderen Gruppe von Brennern getrennt von diesen in der Brennkammerwand positioniert ist. Diese Beispiele machen bereits deutlich, dass die Erfindung eine individuell an jeweilige Brennertypen angepasste Positionierung der zweiten Brennstoffeinbringeinrichtung zulässt, wodurch eine hohe Flexibilität und eine große Einsatzbreite des erfindungsgemäßen Brennersystems erreicht werden kann.

Zweckmäßig umfasst das Brennersystem mehrere Brenner, welche wahlweise gruppenweise oder individuell über die Steuereinrichtung gesteuert werden. Je nach gewünschtem Steuerungsaufwand können somit alle im Brennersystem vorgesehenen Brenner individuell angesteuert werden oder auch zu Gruppen gleicher oder unterschiedlicher Größe zusammengefasst werden, wobei dann eine gruppenweise Steuerung durch die Steuereinrichtung erfolgen kann.

Hierdurch ist es möglich, das Brennersystem sicher nahe der mageren Löschgrenze zu betreiben, ohne alle im Brennersystem befindliche Brenner mit der Steuereinrichtung verbinden zu müssen.

Bei einer weiteren vorteilhaften Ausführungsform der erfindungsgemäßen Lösung weist das Brennersystem Brenner ohne zweite Brennstoffeinbringeinrichtung und/oder Brenner mit kranzförmig ausgebildeter zweiter Brennstoffeinbringeinrichtung und/oder Brenner mit zumindest einer zugehörigen Brennstoffdüse in der Brennkammerwand auf. Dieses Ausführungsbeispiel zeigt, dass das erfindungsgemäße Brennersystem sowohl Brenner mit unterschiedlich ausgebildeter zweiter Brennstoffeinrichtung aufweisen kann als auch die Anordnung herkömmlicher Brenner ohne zweite Brennstoffeinbringeinrichtung erlaubt. Dies bietet den großen Vorteil, dass beispielsweise herkömmliche Feuerungsanlagen mit dem erfindungsgemäßen Brennersystem bzw. den erfindungsgemäßen Brennern nachgerüstet werden können, wobei lediglich einzelne Brenner ersetzt bzw. ausgetauscht werden müssen.

Bei einer bevorzugten Weiterbildung der Erfindung ist der zumindest eine Sensor zur Detektion von zumindest einem der nachfolgenden Parameter ausgebildet: Temperatur, Feuchtigkeitsgehalt, Strömungsdurchfluss, Druck, Brennstoffzusammensetzung. Sensoren zur Ermittlung der vorstehend genannten Parameter sind heutzutage kostengünstig herstellbar und erlauben einen umfassenden Kontrollprozess des Verbrennungsvorgangs in der Brennkammer. Da beispielsweise der Brennstoff nicht immer exakt die gleiche Zusammensetzung aufweist, ist es wichtig, entsprechende Abweichungen zu ermitteln und geeignete Gegenmaßnahmen zu ergreifen. Verändert sich beispielsweise die Brennstoffzusammensetzung, so erkennt dies der Sensor und übermittelt die erfassten Parameter an die Steuereinrichtung, welche die Parameter auswertet und mit vorgegebenen Sollwerten vergleicht und danach die zweite Brennstoffeinbringeinrichtung entsprechend ansteuert. Denkbar sind hierbei unterschiedliche Sensoren, welche vorzugsweise alle verbrennungsrelevanten Parameter erfassen und dadurch eine exakte Erfassung des Verbrennungsprozesses erlauben.

Weitere wichtige Merkmale und Vorteile des erfindungsgemäßen Betriebsverfahrens ergeben sich aus den Unteransprüchen, aus den Zeichnungen und aus der zugehörigen Figurenbeschreibung anhand der Zeichnungen.

### Kurze Beschreibung der Zeichnungen

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen. Es zeigen, jeweils schematisch,
- Fig. 1: eine stark schematisierte Darstellung eines erfindungsgemäßen Brenners,
- Fig. 2: eine stark schematisierte Darstellung eines erfindungsgemäßen Brennersystems mit mehreren Brennern.

### Wege zur Ausführung der Erfindung

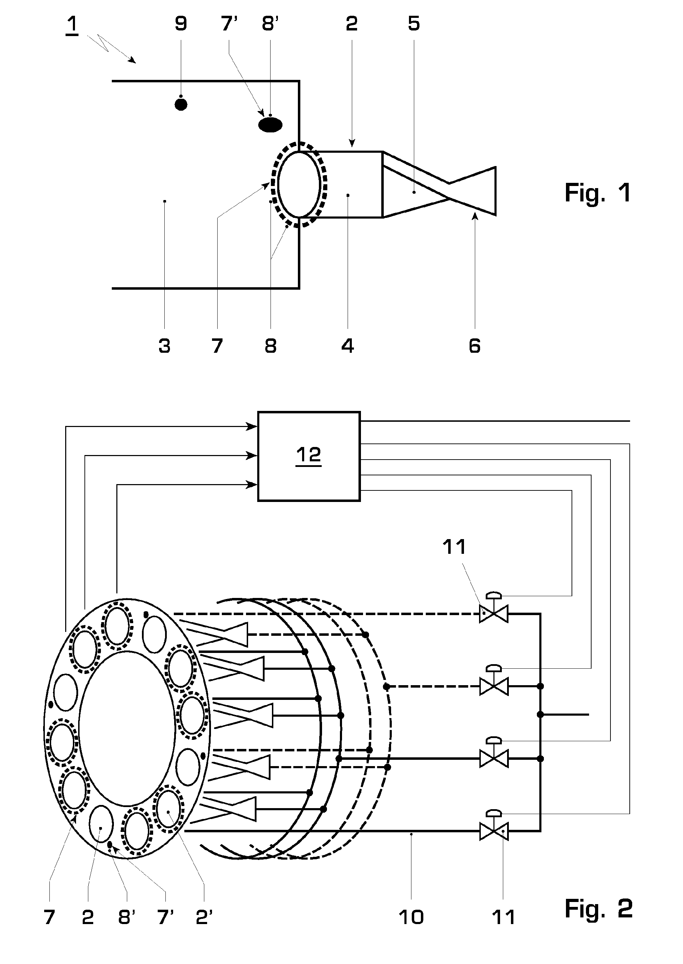

Entsprechend Fig. 1 weist ein erfindungsgemäßes Brennersystem 1 mit gestufter Brennstoff-Eindüsung zumindest einen Brenner 2 auf. Von links nach rechts ist in Fig. 1 eine Brennkammer 3, eine Mischzone 4 sowie ein Einströmbereich 5 des Brenners 2 angeordnet. Der Einströmbereich 5 kann dabei beispielsweise als Drallerzeuger ausgebildet sein und dem in die Mischzone 4 einströmenden Brennstoff-Luftgemisch eine drallförmige Bewegung aufzwingen. Stromab der Brennkammer 3 kann sich beispielsweise eine nicht gezeigte Gasturbine befinden.

Im Einströmbereich 5 bzw. stromauf der Mischzone 4 ist eine erste Brennstoffeinbringeinrichtung 6 angeordnet, welche Brennstoff in den Einströmbereich 5 einleitet. Stromab der Mischzone 4 ist erfindungsgemäß eine zweite Brennstoffeinbringeinrichtung 7 angeordnet, die zur direkten Einspritzung bzw. Einbringung von Brennstoff in die Brennkammer 3 ausgebildet ist. In Fig. 1 sind dabei zwei unterschiedliche Arten der zweiten Brennstoffeinbringeinrichtung 7 bzw. 7' dargestellt, wobei die Brennstoffeinbringeinrichtung 7' zumindest eine Brennstoffdüse 8' aufweist, während die Brennstoffeinbringeinrichtung 7 mehrere, vorzugsweise ring- bzw. kranzförmig am Brennerausgang bzw. am Ausgang der Mischzone 4 angeordnete Düsen 8 aufweist, mit welchen der Brennstoff in die Brennkammer 3 eingedüst werden kann. Die zweite Brennstoffeinbringeinrichtung 7 ist somit an der Ausgangsseite des Brenners 2 angeordnet bzw. ausgebildet, während die zweite Brennstoffeinrichtung 7' getrennt vom Brenner 2 in einer Brennkammerwand angeordnet ist. Dabei liegen sowohl der Ausgang des Brenners 2 als auch die zweite Brennstoffeinbringeinrichtung 7' vorzugsweise in derselben Brennkammerwand, beispielsweise der Stirnwand der Brennkammer 3.

Wie der Fig. 1 weiter zu entnehmen ist, ist in der Brennkammer 3 an geeigneter Stelle zumindest ein Sensor 9 zur Ermittlung verbrennungstechnischer Parameter, beispielsweise einer Brenntemperatur, eines Feuchtegehalts, eines Strömungsdurchflusses, eines Brennkammerdrucks oder einer Brennstoffzusammensetzung angeordnet. Der zumindest eine Sensor 9 liefert dabei die für den Verbrennungsprozess relevanten Parameter, anhand welcher die Güte des Verbrennungsprozesses einschätzbar ist. In Fig. 1 ist dabei lediglich ein Sensor 9 exemplarisch dargestellt, wobei selbstverständlich denkbar ist, dass mehrere Sensoren zur Erfassung unterschiedlicher Parameter im Bereich der Brennkammer 3 angeordnet sein können, und sich dadurch ein breites Spektrum verbrennungstechnisch relevanter Parameter ermitteln lässt.

Gemäß Fig. 2 ist eine Mehrzahl an Brennern 2, hier beispielhaft dargestellt zwölf, ring- bzw. kranzförmig angeordnet, so dass das erfindungsgemäße Brennersystem 1 gemäß der Fig. 2 insgesamt zwölf Brenner 2 umfasst. Dabei weisen gemäß Fig. 2 vier Brenner 2 eine zweite Brennstoffeinbringeinrichtung 7' auf, die getrennt von dem jeweiligen Brenner 2 in der Brennkammerwand angeordnet ist, während insgesamt acht Brenner 2' jeweils eine zweite Brennstoffeinbringeinrichtung 7 aufweisen, welche im Austrittsbereich der jeweiligen Brenner 2' ausgebildet sind.

Gespeist werden sowohl die ersten Brennstoffeinbringeinrichtungen 6 als auch die zweiten Brennstoffeinbringeinrichtungen 7 über jeweils zugehörige Brennstoffleitungen 10, welche gemäß Fig. 2 mit Ventilen 11 versehen sind, die von einer Steuereinrichtung 12 ansteuerbar sind. Die Steuereinrichtung 12 ist eingangsseitig mit zumindest einem, gemäß Fig. 2 insgesamt drei Sensoren 9 verbunden, während sie ausgangsseitig mit den Ventilen 11 kommunizierend verbunden ist. Erfindungsgemäß ist dabei die Steuereinrichtung 12 derart ausgebildet, dass sie die zweiten Brennstoffeinbringeinrichtungen 7, 7' in Abhängigkeit der von den Sensoren 9 ermittelten Parameter steuern kann. Denkbar ist dabei auch, dass die einzelnen Brenner 2 gruppenweise zusammengefasst sind und dadurch gruppenweise von der Steuereinrichtung 12 gesteuert werden können oder aber, dass die Brenner 2 individuell über die Steuereinrichtung 12 gesteuert werden. Darüber hinaus ist vorstellbar, dass alle zweiten Brennstoffeinbringeinrichtungen 7, 7' simultan, das heißt einheitlich, von der Steuereinrichtung 12 gesteuert werden.

Wie in Fig. 2 gezeigt, kann dabei das erfindungsgemäße Brennersystem 1 sowohl Brenner 2 mit jeweils zumindest einer zugehörigen Brennstoffdüse 8' aufweisen und Brenner 2' mit jeweils kranzförmig ausgebildeter zweiter Brennstoffeinbringeinrichtung 7. Denkbar ist darüber hinaus, dass auch herkömmliche Brenner ohne zweite Brennstoffeinbringeinrichtung 7 in dem erfindungsgemäßen Brennersystem 1 angeordnet sind. Prinzipiell ist dabei die Steuereinrichtung 12 so ausgebildet, dass sie die erste Brennstoffeinbringeinrichtung 6 unabhängig von den von den Sensoren 9 ermittelten Parametern steuern kann, so dass insbesondere vorstellbar ist, dass die zweiten Brennstoffeinbringeinrichtungen 7, 7' über separate Brennstoffleitungen 10 versorgt werden und beispielsweise andere, das heißt von den ersten Brennstoffeinbringeinrichtungen 6 verschiedene Brennstoffe in die Brennkammer 3 einbringen können.

Im vorliegenden soll nun kurz ein Verfahren zur Steuerung des erfindungsgemäßen Brennersystems 1 mit gestufter Brennstoff-Eindüsung erläutert werden. Beim Betrieb des erfindungsgemäßen Brennersystems 1 ermittelt der wenigstens eine Sensor 9 ständig oder zumindest temporär in der Brennkammer 3 auftretende und für die Verbrennung relevante Parameter. Diese ermittelten Parameter werden von dem wenigstens einen Sensor 9 an die Steuereinrichtung 12 weitergegeben, welche diese mit vorgegebenen Sollwerten vergleicht und dementsprechend Ventile 11 und damit die zweiten Brennstoffeinbringeinrichtungen 7, 7' ansteuert. Dies kann beispielsweise beim Erreichen der mageren Löschgrenze durch ein Öffnen der Ventile verwirklicht werden. Dabei bildet die Steuereinrichtung 12 mit dem wenigstens einen Sensor 9 einen geschlossenen Regelkreis.

### Bezugszeichenliste

- 1: Brennersystem
- 2: Brenner
- 3: Brennkammer
- 4: Mischzone
- 5: Einströmbereich
- 6: erste Brennstoffeinbringeinrichtung
- 7: zweite Brennstoffeinbringeinrichtung
- 8: Brennstoffdüse
- 9: Sensor
- 10: Brennstoffleitung
- 11: Ventil
- 12: Steuereinrichtung

## Patentansprüche

1. Brennersystem (1) mit gestufter Brennstoff-Eindüsung, umfassend zumindest,
- einen Brenner (2) mit einem Einströmbereich (5) für einen Verbrennungsluftstrom und einer stromab des Einströmbereichs (5) gelegenen Mischzone (4),
- eine stromab der Mischzone (4) gelegene Brennkammer (3),
- eine stromauf der Mischzone (4) angeordnete erste Brennstoffeinbringeinrichtung (6),
- eine stromab der Mischzone (4) angeordnete zweite Brennstoffeinbringeinrichtung (7, 7'), die zur direkten Eindüsung von Brennstoff in die Brennkammer (3) ausgebildet ist,
- zumindest einen Sensor (9) zur Ermittlung verbrennungstechnischer Parameter,
- eine mit dem Sensor (9) und der zweiten Brennstoffeinbringeinrichtung (7, 7') verbundene Steuereinrichtung (12), welche zur Steuerung der zweiten Brennstoffeinbringeinrichtung (7, 7') in Abhängigkeit der ermittelten Parameter ausgebildet ist.

2. Brennersystem nach Anspruch 1,
**dadurch gekennzeichnet,**
**dass** die zweite Brennstoffeinbringeinrichtung (7) entweder an einer Ausgangsseite des Brenners (2) ausgebildet oder getrennt von diesem in einer Brennkammerwand angeordnet ist.

3. Brennersystem nach Anspruch 1 oder 2,
**dadurch gekennzeichnet,**
**dass** der zumindest eine Sensor (9) zur Detektion von zumindest einem der nachfolgenden Parameter ausgebildet ist: Temperatur, Feuchtigkeitsgehalt, Strömungsdurchfluss, Druck, Brennstoffzusammensetzung.

4. Brennersystem nach einem der Ansprüche 1 bis 3,
**dadurch gekennzeichnet,**
**dass** die erste und die zweite Brennstoffeinbringeinrichtung (6, 7) jeweils an eine separate Brennstoffleitung (10) angeschlossen sind.

5. Brennersystem nach einem der Ansprüche 1 bis 4,
**dadurch gekennzeichnet,**
**dass** die erste und die zweite Brennstoffeinbringeinrichtung (6, 7) zur Verbrennung unterschiedlicher Brennstoffarten ausgebildet sind.

6. Brennersystem nach einem der Ansprüche 1 bis 5,
**dadurch gekennzeichnet,**
**dass** das Brennersystem (1) mehrere Brenner (2, 2') umfasst, welche gruppenweise oder individuell über die Steuereinrichtung (12) gesteuert werden.

7. Brennersystem nach einem der Ansprüche 1 bis 6,
**dadurch gekennzeichnet,**
- **dass** die zweite Brennstoffeinbringeinrichtung (7') zumindest eine Brennstoffdüse (8') aufweist, mit welcher der Brennstoff in die Brennkammer (3) eingedüst wird, und/oder
- **dass** die zweite Brennstoffeinbringeinrichtung (7) mehrere, kranzförmig am Brennerausgang angeordnete Brennstoffdüsen (8) aufweist, mit welchen der Brennstoff in die Brennkammer (3) eingedüst wird.

8. Brennersystem nach Anspruch 7,
**dadurch gekennzeichnet,**
**dass** das Brennersystem (1) Brenner (2) ohne zweite Brennstoffeinbringeinrichtung (7) und/oder Brenner (2) mit kranzförmig ausgebildeter zweiter Brennstoffeinbringeinrichtung (7) und/oder Brenner (2) mit zumindest einer Brennstoffdüse (8') in der Brennkammerwand aufweist.

9. Brennersystem nach einem der Ansprüche 1 bis 8,
**dadurch gekennzeichnet,**
**dass** die Steuereinrichtung (12) so ausgebildet ist, dass sie die erste Brennstoffeinbringeinrichtung (6) unabhängig von den ermittelten Parametern steuert.

10. Brennersystem nach einem der Ansprüche 1 bis 9,
**dadurch gekennzeichnet,**
**dass** der Einströmbereich (5) als Drallerzeuger ausgebildet ist.

11. Verfahren zur Steuerung eines Brennersystems (1) mit gestufter Brennstoff-Eindüsung nach zumindest einem der Ansprüche 1 bis 10, wobei der zumindest eine Sensor (9) verbrennungstechnische Parameter ermittelt und die Steuereinrichtung (12) zumindest die zweite Brennstoffeinbringeinrichtung (7) in Abhängigkeit der ermittelten Parameter steuert.

12. Verfahren nach Anspruch 11,
**dadurch gekennzeichnet,**
**dass** die Steuereinrichtung (12) mit dem wenigstens einen Sensor (9) einen geschlossenen Regelkreis bildet.
